# EUROPÄISCHE PATENTSCHRIFT

(11) **EP 0 953 480 B1**
(45) Veröffentlichungstag und Bekanntmachung des Hinweises auf die Patenterteilung: **20.08.2003**
(21) Anmeldenummer: 99107919.5
(22) Anmeldetag: 22.04.1999
(51) Int. Cl.: B60R 16/00, B60R 21/20

(54) **Lenkradschalter für ein Kraftfahrzeug**
Steering wheel switch for a vehicle
Commutateur monté sur l'arbre de direction pour un véhicule

(30) Priorität: 02.05.1998 DE 19819695
(43) Veröffentlichungstag der Anmeldung: 03.11.1999
(73) Patentinhaber: Delphi Technologies Inc., Troy, MI 48007 (US)
(72) Erfinder: Rudolph, Gerd, 55459 Aspisheim (DE); Weiss, Hans-Günter, 67550 Worms (DE); Lange, Erhard, 67823 Obermoschel (DE)
(74) Vertreter: Becker, Bernd, Dipl.-Ing.

(56) Entgegenhaltungen:
- WO-A-98/02337
- DE-A- 1 655 117
- DE-A- 2 810 790
- US-A- 5 303 952
- US-A- 5 331 124

## Beschreibung

Die Erfindung bezieht sich auf einen Lenkradschalter für ein Kraftfahrzeug gemäß dem Oberbegriff des Anspruchs 1. Ein derartiger Lenkradschalter ist aus der US-A-5 303 952 bekannt.

Aus der DE AS 28 10 790 ist eine Schaltereinheit mit einem auf ein Mantelrohr der Lenksäule aufsteckbaren Trägergehäuse zur Aufnahme unterschiedlicher, jeweils mit einer gesonderten elektrischen Zuleitung bzw. eines gesonderten Leitungsbaums versehener Einzelschalter bekannt. Jeder Einzelschalter ist mittels in Form von Federn angeformten Vorsprüngen in Nuten des Trägergehäuses geführt und mittels Klipsverbindungen in seiner Position gehalten. Das Trägergehäuse weist einen federnden Hupenkontakt auf, dessen Anschluß von der Seite des Mantelrohres über eine weitere Leitung erfolgt, an der ein Kontaktteil angecrimpt ist. Der Stromkreis wird über eine Masseverbindung des Lenkrades geschlossen. Bei der Montage des Lenkrades muß beachtet werden, daß der Anschluß des Hupenkontaktes nicht unterbrochen wird. Die einzelnen elektrischen Anschlüsse für die Einzelschalter und den Hupenkontakt sind verhältnismäßig kostspielig und erhöhen die Fehlermöglichkeiten bei der Montage bzw. bei der Reparatur der Schaltereinheit.

Des weiteren ist aus der DE 1 655 117 A1 ein Lenkstockschalter bekannt, dessen Schaltergehäuse einen Einzelschalter sowie ein Zündschloß aufnimmt. Der Einzelschalter ist mittels einer Zuleitung, die durch einen kanalartigen Hohlraum des Schaltergehäuses geführt ist, elektrisch angeschlossen. Zur elektrischen Verbindung ist der Lenkstockschalter mit einem Steckdosenteil versehen, in das die entsprechende Zuleitung mündet, wobei der Einzelschalter ein korrespondierendes Stekkerteil trägt. Ferner ist ein separates Massenkabel vorgesehen, das mit einem gehäusefesten Kugellager in Verbindung steht. Der Anschluß des Zündschloßes erfolgt über eine weitere Steckverbindung der entsprechenden Zuleitung. Die elektrischen Verbindungen erfordern separate Zuleitungen, die durch das Gehäuse des Lenkstockschalters geführt und in diesem befestigt werden müssen, was zu einem erhöhten Montageaufwand führt.

Um ein Airbagmodul im vorderen zentralen Teil eines Lenkrades zu haltern, ist dieses häufig dem Trägergehäuse des Lenkstockschalters zugeordnet. Die Betätigungselemente für einen Hupenschalter werden entweder in einem benachbarten Bereich des Airbagmoduls angeordnet, was insofern nachteilig ist, als die Betätigung der Hupe in Streßsituationen nicht rechtzeitig erfolgt, da zuerst das Betätigungelement für die Hupe gefunden werden muß, oder als das Airbagmodul überdeckende Prallplatte ausgeführt, mittels der der Hupenschalter betätigt wird. Diese Anordnung bedingt eine aufwendige Zuleitung, um den elektrischen Anschluß des Hupenschalters zu realisieren.

Es ist Aufgabe der Erfindung, einen Lenkradschalter der eingangs genannten Art zu schaffen, der eine einfache Anpassung an verschiedene Schalterfordernisse ermöglicht und einen kompakten, kostengünstigen Aufbau aufweist.

Erfindungsgemäß wird die Aufgabe bei einem gattungsgemäßen Lenkradschalter durch die kennzeichnenden Merkmale des Anspruchs 1 gelöst.

Der Einzelschalter sowie Hupenschalter umfassende Lenkradschalter benötigt zum Anschluß an die kraftfahrzeugseitigen elektrischen Einrichtungen lediglich eine Zuleitung bzw. einen Kabelbaum, der mit den Anschlußkontakten des Lenkradschalters verbunden ist. Eine weitere separate Kabelführung von Zuleitungen innerhalb des Lenkradschalters entfällt, da diese mittels der internen Verbindungsleitungen der Kontakteinheit realisiert ist. An den Schalterführungen der Kontakteinheit werden den unterschiedlichen Schalterfordernissen entsprechend Einzelschalter angeordnet, die direkt die Verbindungsleitungen kontaktieren. Der der Kontakteinheit zugeordnete Hupenschalter ist ebenfalls direkt mit den Verbindungsleitungen elektrisch verbunden. Die Betätigung des Hupenschalters erfolgt durch das Niederdrücken des Trägergehäuses, indem eine das Airbagmodul überdeckende Prallplatte betätigt wird. Da das Trägergehäuse federbelastet und taumelnd gelagert ist, kann die Prallplatte an beliebiger Stelle betätigt werden, wobei nach dem Loslassen die Rückstellung des Trägergehäuses gewährleistet ist. Der Lenkradschalter umfaßt also verschiedenen Module, die separat sowie kostengünstig zu fertigen und den unterschiedlichen Erfordernissen entsprechend miteinander montierbar sind, wobei eine sehr kompakte Bauweise des Lenkradschalters gegeben ist.

Nach einer vorteilhaften Ausgestaltung der Erfindung sind die als Stanzgitter ausgebildeten Verbindungsleitungen der Kontakteinheit in einem umhüllenden Kunststoffkörper eingebettet, der Trennstellen besitzt, an denen die Verbindungsleitungen über freiliegende Stege miteinander verbunden sind. Das Stanzgitter gewährleistet eine sichere, in der Herstellung unproblematische Verbindung, die durch den umhüllenden Kunststoffkörper die Anforderungen an die elektrische Isolierung erfüllt. Die Stege bedingen das Layout des Stanzgitters, sie trennen die Verbindungsleitungen an gewünschter Stelle und fixieren das Stanzgitter während des Umspritzens. Die Trennstellen erlauben ein optisches Überprüfen der durchtrennten Strompfade. Die derart hergestellte Kontakteinheit läßt sich einfach montieren und ist unempfindlich bei der Handhabung.

Bevorzugt weist der Kunststoffkörper im Bereich der Steckerstifte der Schalterführungen, der Anschlußkontakte und der Hupenschalter Freimachungen auf, wodurch die Verbindungsleitungen freiliegende Kontaktstellen bilden. Hierdurch ist das einfache Applizieren kontaktierender Elemente auf unterschiedlichste Art gewährleistet.

Vorzugsweise sind die Anschlußkontakte und die Schaltkontakte der Schalterführungen als an den Verbindungsleitungen angeschweißte Steckerstifte ausgebildet. Sonach lassen sich die Steckerstifte aus Profilmaterial einfach herstellen, mittels Automaten den Kontaktstellen zuordnen und am Stanzgitter befestigen.

Um eine direkte Ausrichtung an die anzubauenden bzw. anzuschließenden Bauteile zu erreichen und damit das Verlegen der Zuleitung in Schleifen zu verhindern, weisen zweckmäßigerweise die Steckerstifte der Anschlußkontakte in Richtung der Stützplatine und die Steckerstifte der Schalterführungen in Richtung des Trägergehäuses.

Zur Anpassung der Bauhöhe der Einzelschalter an die Bauhöhe des mit dem Airbagmodul versehenen Trägergehäuses sind die die Einzelschalter aufnehmenden Schalterführungen auf gegenüberliegenden doppelten Abwinklungen der Kontakteinheit angeordnet. Des weiteren ist die bekannte Anordnung der unterschiedlichen Einzelschalter, nämlich rechts und linksseitig am Lenkrad, beibehalten.

Die Einzelschalter sollen genau geführt sein und ohne große Zwischenräume am Trägergehäuse des Lenkradschalters anschließen, ohne daß Justierarbeiten durchgeführt werden. Daher umfassen bevorzugt die Schalterführungen einen die Schaltkontakte umschließenden Kragen, der eine Steckkodierung aufweist. Der die Schaltkontakte umschließende Kragen schützt diese vor mechanischer Beschädigung und gewährleistet die gewünschte Lagepositionierung der Einzelschalter zu dem Trägergehäuse des Lenkradschalters.

Nach einer vorteilhaften Weiterbildung der Erfindung ist das Trägergehäuse auf der der Stützplatine zugewandten Seite mit mehreren die Kontakteinheit durchragenden Gewindebuchsen zur Verschraubung des Trägergehäuses mit der Stützplatine versehen. Die Kontakteinheit weist auf ihrer der Stützplatine zugewandten Seite mehrere von Druckfedern übergriffene in Richtung der Stützplatine offene Dome auf, die länger als die Gewindebuchsen ausgeführt sind, wobei jeder der diametral geschlitzten Dome einen als Tastschalter ausgebildeten Hupenschalter aufnimmt. Diese Maßnahmen gewährleisten einen kompakten Aufbau des Lenkradschalters, der die taumelnde, federbelastete Lagerung des Trägergehäuses auf der Stützplatine implizit enthält. Die Anordnung der Druckfedern bewirkt die sichere Rückstellfunktion der Hupenschalter, die durch die in den Tastschaltern enthaltenen Federn nicht sichergestellt ist.

Zweckmäßigerweise sind die Druckfedern zwischen Stützplatine und Kontakteinheit mit Vorspannung angeordnet. Diese Anordnung verhindert geräuschverursachende Vibrationen innerhalb des Lenkradschalters.

Bevorzugt weisen die Seitenwände jedes Domes mindestens die gleiche Höhe wie der zugeordnete Hupenschalter im betätigten Zustand und innere Führungsrippen zu Fixierung des Hupenschalters auf. Im Boden jedes Domes der Kontakteinheit ist mindestens ein Einsetzloch vorhanden, in das ein an der Unterseite des Hupenschalters angeformter Zapfen eingesetzt ist. Hierdurch wirken die die Hupenschalter aufnehmenden Dome als Anschläge, die den Schaltweg begrenzen und so die Beschädigung der Tastschalter aufgrund übermäßiger Krafteinwirkung verhindern. Ferner ist der Hupenschalter in seiner Lage fixiert.

Um eine zweckmäßige Befestigungsmöglichkeit der Einzelkomponenten des Lenkradschalters zu erhalten, weist die Kontakteinheit im Bereich jeder seitlichen Abwinklung sowie dazu beabstandet jeweils eine Bohrung zur Verschraubung sowohl der Einzelschalter als auch des Trägergehäuses mit der Kontakteinheit auf.

Aufgrund des dünnen Aufbaus der Kontakteinheit besteht die Gefahr, daß durch Vibrationen Geräusche verursacht werden. Um dem entgegen zu wirken ist die Kontakteinheit auf der dem Trägergehäuse und/oder auf der der Stützplatine zugewandten Seite mit Ausgleichsrippen versehen. Die Ausgleichsrippen sind so dünn gestaltet, daß sie sich unter elastischer und/oder plastischer Verformung an den ihnen gegenüberliegenden Flächen abstützen und eine Geräuschentwicklung der Kontakteinheit verhindern.

Zum Ausgleich der Fertigungstoleranzen und der Wärmedehnungen ist der Kontakteinheit mindestens ein Toleranzausgleich zugeordnet. Der Toleranzausgleich ist als das Stanzgitter einseitig freilegender Ausbruch im Bereich der Abwinklungen der Kontakteinheit ausgebildet. Diese einfach durchzuführende Maßnahme erlaubt den Ausgleich von Längen- und Höhentoleranzen, wobei gleichzeitig die Höhenlage der Einzelschalter beeinflußt werden kann. In einer alternativen Ausführung ist der Toleranzausgleich durch mindestens einen Ausbruch in einem ebenen Bereich der Kontakteinheit eingearbeitet, wobei das Stanzgitter im Bereich des Ausbruchs eine Dehnschleife aufweist. Hierdurch können größere Längenänderungen der Kontakteinheit bzw. des Trägergehäuses ausgeglichen werden. Durch plastische Verformung der Kontakteinheit im Bereich der Dehnschleife ist eine Anpassung an unterschiedliche Einbaumaße des Trägergehäuses möglich.

Damit die Verbindungsleitungen im Bereich der Dehnschleife nicht mit dem Trägergehäuse in Berührung kommen und somit die elektrische Sicherheit gewährleistet ist, sind zweckmäßigerweise im Bereich des Ausbruchs zwischen den Verbindungsleitungen des Stanzgitters die Dehnschleife überragende Isolierscheiben an einer Seite der Kontakteinheit angeordnet.

Zur Kodierung der Schaltströme der Kontakteinheit bzw. der Einzelschalter sind zwischen den Verbindungsleitungen der Kontakteinheit und/oder den Schaltleitungen in den Einzelschaltern Widerstände zwischengeschaltet.

Die Erfindung wird im folgenden anhand eines Ausführungsbeispieles unter Bezugnahme auf die zugehörigen Zeichnungen näher erläutert. Es zeigen:
- Fig.1: eine Draufsicht auf einen erfindungsgemäßen Lenkradschalter,
- Fig.2: eine Ansicht auf die Darstellung nach Fig. 1 in Richtung des Pfeils II,
- Fig.3: eine Ansicht auf die Darstellung nach Fig. 2 in Richtung des Pfeils III,
- Fig.4: eine Draufsicht auf eine Kontakteinheit des Lenkradschalters nach Figur 1,
- Fig.5: eine Ansicht auf die Darstellung nach Fig. 4 in Richtung des Pfeils V,
- Fig.6: eine Ansicht auf die Darstellung nach Fig. 5 in Richtung des Pfeils VI,
- Fig.7: eine Ansicht auf die Darstellung nach Fig. 6 in Richtung des Pfeils VII,
- Fig.8: eine vergrößerte Draufsicht auf die Darstellung nach Fig. 4 mit offen gelegtem Stanzgitter,
- Fig.9: einen Teilschnitt durch die Darstellung nach Fig. 6 gemäß der Linie IX-IX in vergrößerter Darstellung,
- Fig.10: einen Teilschnitt durch die Darstellung nach Fig. 4 gemäß der Linie X-X in vergrößerter Darstellung,
- Fig.11: einen Teilschnitt durch die Darstellung nach Fig. 6 gemäß der Linie XI-XI in vergrößerter Darstellung,
- Fig.12: einen Teilschnitt durch die Darstellung nach Fig. 6 gemäß der Linie XII-XII in vergrößerter Darstellung,
- Fig.13: eine Ansicht auf die Darstellung nach Fig. 6 in Richtung des Pfeils XIII,
- Fig.14: einen vergrößerten Teilschnitt durch die Darstellung nach Fig. 3 in Richtung des Pfeils XIV,
- Fig.15: eine vergrößerte Darstellung der Einzelheit XV der Fig. 7 in einer alternativen Ausgestaltung,
- Fig.16: eine vergrößerte Teilansicht einer alternativen Kontakteinheit nach Figur 4 in Pfeilrichtung V, die nach Fig. 17 gemäß der Linie XVI-XVI geschnitten ist, und
- Fig.17: eine Ansicht auf die Darstellung nach Fig. 16 in Richtung des Pfeils XVII.

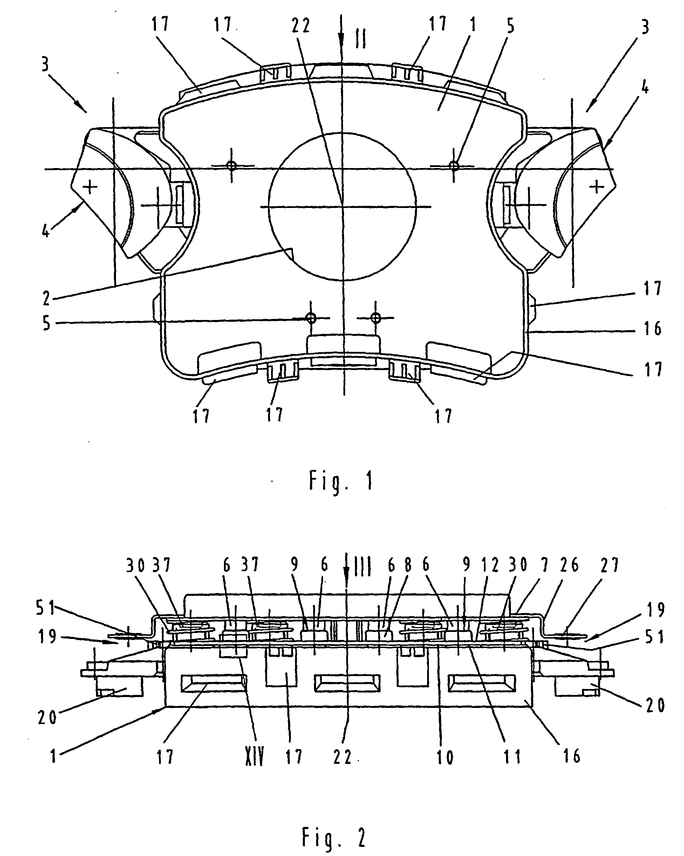

In den Fig. 1 bis 3 ist der Lenkradschalter im zusammengebauten Zustand dargestellt. Ein ein nicht dargestelltes Airbagmodul aufnehmendes Trägergehäuse 1 ist mit einem umlaufenden Rand 16 versehen. Mittig weist das Trägergehäuse 1 eine kreisförmige Aussparung 2 auf, durch die eine Verschraubung eines nicht dargestellten Lenkrades mit einer nicht dargestellte Lenksäule zugängig ist. Rechts und links des Trägergehäuses 1 ist jeweils ein Einzelschalter 3 befestigt, der ein zweigeteiltes Bedienelement 4 umfaßt, das in seiner Form dem Design des nicht dargestellten Lenkrades bzw. des Airbagmoduls angepaßt ist. Auf der Rückseite des Trägergehäuses 1 sind Gewindebohrungen 5 aufnehmende Gewindebuchsen 8 angeformt, in die Distanzschrauben 6 bis zu ihrem Distanzanschlag 9 eingedreht sind. Zwischen der Rückseite des Trägergehäuses 1 und einer Stützplatine 7 ist eine Kontakteinheit 10 angeordnet, die mit einer Seite 11 an der Rückseite des Trägergehäuses 1 anliegt. An der metallischen Stützplatine 7 sind im Inlay-Spritzverfahren vier Kunststofflaschen 13 angebracht, die ein Lager für die Distanzschrauben 6 und einen Druckstößel 14 zur Betätigung eines zugeordneten Hupenschalters 15 bilden. Am umlaufenden Rand 16 des Trägergehäuses 1 sind Aufsteckelemente 17 zur Befestigung einer das Airbagmodul überdeckenden Prallplatte eines Lenkrades bzw. einer Lenkradverkleidung angeformt. Die Festlegung des Lenkradschalters in einem Lenkrad bzw. an einem lenkradfesten Träger erfolgt mittels Befestigungs- bzw. Zentrierbohrungen 18 der Stützplatine 7.

Die Kontakteinheit 10 weist seitliche Abwinklungen 19 auf, deren mittlere Stege 21 sich von der Kontakteinheit 10 parallel zum umlaufenden Rand 16 in Richtung des Trägergehäuses 1 erstrecken. Jede Abwinklung 19 trägt eine das Trägergehäuse 1 durchragende Schalterführung 20. Der umlaufende Rand 16 des Trägergehäuses 1, der mittlere Steg 21 der Abwinklung 19 und die Schalterführungen 20 sind parallel zur Achse 22 der Lenksäule ausgerichtet.

Die Stützplatine 7 umfaßt einen mittigen Durchbruch 23, dessen Kanten 24 im Randbereich zur Versteifung abgewinkelt sind. Der Durchbruch 23 ist mit einer Ausformung 31 versehen, durch die Anschlußkontakte 32 der Kontakteinheit 10 ragen. Die Anschlußkontakte 32 ermöglichen die Zuleitung zu einem Bordnetz des Kraftfahrzeugs. Am äußeren Rand der Stützplatine 7 sind weitere Randversteifungen 25 vorhanden. Der trapezförmige Teil der Stützplatine umfaßt zwei gegenüberliegende 90° Abkantungen, wobei die erste Abkantung 26 parallel zur Achse 22 der Lenksäule und die zweite Abkantung 27 senkrecht zur ersten Abkantung 26 verläuft. In die Stützplatine 7 sind Freistanzungen 28 eingebracht, durch die zum einen Schrauben 29 zur Befestigung der Einzelschalter 3 erreichbar sind und zum anderen Freiraum zur Anordnung von Druckfedern 30 geschaffen wird, die mittelbar die Rückstellung der Hupenschalter 15 bewirken.

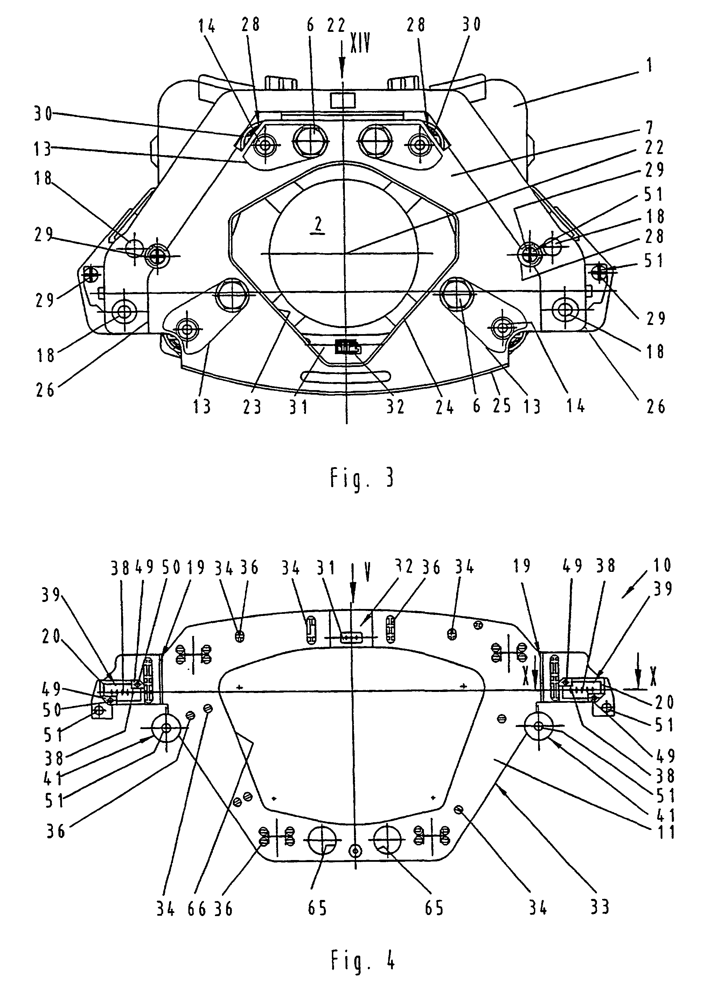

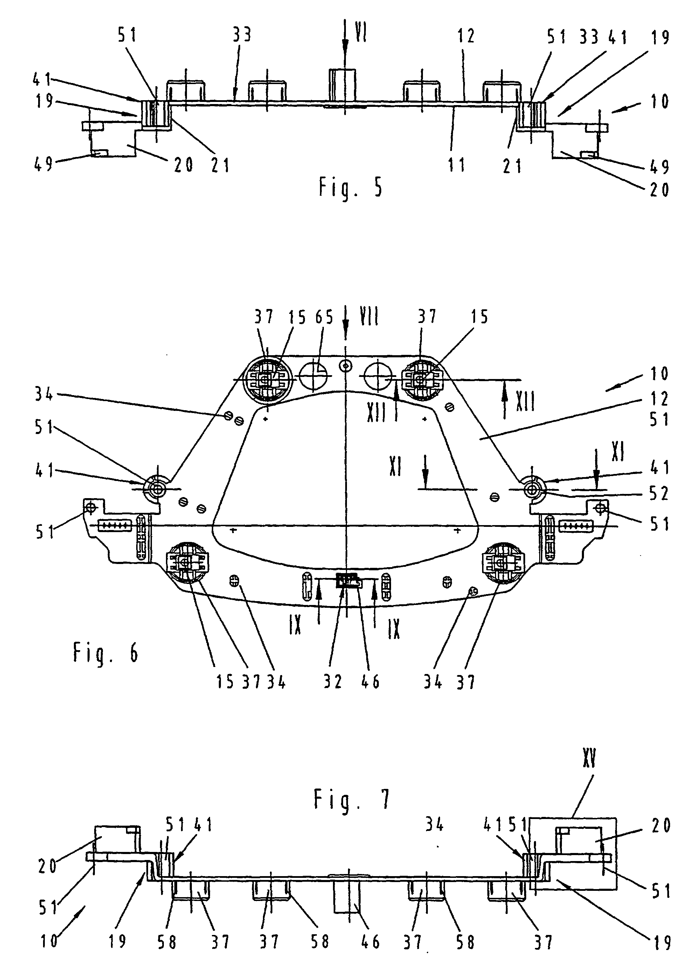

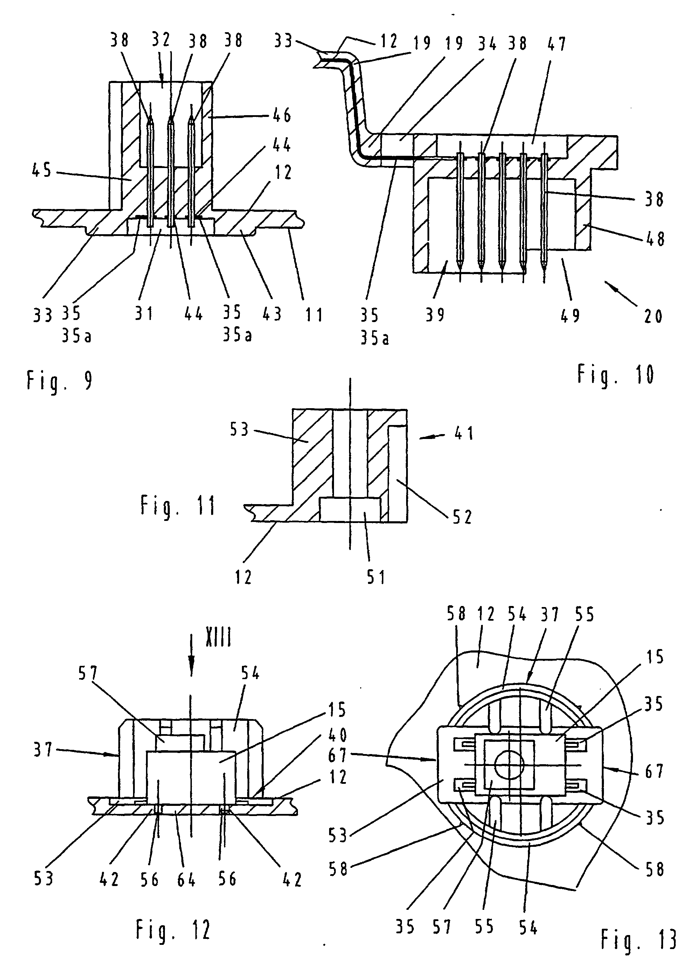

In den Fig. 4 bis 7 sind verschiedene Ansichten der Kontakteinheit 10 dargestellt. Die dem Trägergehäuse 1 zugewandte Seite 11 läßt in einen die Kontakteinheit 10 umhüllenden Kunststoffkörper 33 eingelassene Trennstellen 34, teilweise Verbindungsleitungen 35, 35a sowie die Verbindungsleitungen 35 verbindenden Stege 36 erkennen. Die Form der Trennstellen 34 ist der Lage der zu trennenden Stege 36 angepaßt, wobei die Trennstelle 34 rund oder langlochförmig ausgebildet ist. Oben mittig ist die Rückseite der in einer Vertiefung 37 im Kunststoffkörper 33 eingebetteten Anschlußkontakte 32 erkennbar, die mit den dort freiliegenden Verbindungsleitungen 35 laserverschweißt sind (siehe Fig. 9). An der Kontakteinheit 10 ist jeweils rechts und links eine Schalterführung 20 an der sich in Richtung des Lenkrades erstreckenden doppelten Abwinklung 19 angeordnet.

Auf der der Stützplatine 7 zugewandten Seite 12 der Kontakteinheit 10 weist der Kunststoffkörper 33 ebenfalls Trennstellen 34 auf. An den Stellen, an denen keine Trennung der Verbindungsleitungen 35, 35a erfolgt, an denen aber die Verbindungsleitungen 35, 35a an beiden Seiten 11, 12 der Kontakteinheit 10 frei liegen, erfolgt eine werkzeugseitige Halterung der Verbindungsleitungen 35, 35a während des Umspritzens. Weiterhin sind an diesen Stellen die Anschlußkontakte 32 bzw. vier jeweils einen Hupenschalter 15 aufnehmende Dome 37 angeordnet. Von den Anschlußkontakten 32 erstrecken sich innerhalb des Kunststoffkörpers 33 die Verbindungsleitungen 35 bis zu den in den Schalterführungen 20 angeordneten, als Steckerstifte 38 ausgebildeten Schalterkontakte 39. Im Verlauf der als Stanzgitter ausgebildeten Verbindungsleitungen 35, 35a bilden die an vier Stellen innerhalb jedes Domes 37 freiliegenden Verbindungsleitungen 35, 35a Kontaktstellen 40 für die Hupenschalter 15. Einstückig mit dem Kunststoffkörper 33 der Kontakteinheit 10 sind auch die Lageelemente 41 ausgeführt, die jeweils eine Bohrung 51 umfassen.

Die Seitenwände 54 der vier Dome 37 sind mit angeformten Klemmrippen 58 versehen, die jeweils von einer Druckfeder 30 übergriffen werden. Der innere Durchmesser der Druckfeder 30 und die nach außen gerichteten Spitzen der Klemmrippen 58 sind so aufeinander abgestimmt, daß sich die Druckfeder 30 nach dem Aufschieben auf den Dom 37 leicht verklemmt.

Zur Festlegung der Kontakteinheit 10 an dem Trägergehäuse 1 werden die Einzelschalter 3 mittels einer die Bohrungen 51 der Lageelemente 41 durchragenden Verschraubung befestigt, wobei das Trägergehäuse 1 zwischen den Einzelschaltern 3 und der Kontakteinheit 10 angeordnet ist. Die Stützplatine 7 ist mittels der Distanzschrauben 6, die zwei Löcher 65 und die mittlere freie Aussparung 66 der Kontakteinheit 10 durchdringen mit dem Trägergehäuse 1 verbunden. Zwischen der Kontakteinheit 10 und der Stützplatine 7 sind die Druckfedern 30 mit Vorspannung angeordnet, so daß eine taumelnde Lagerung des Trägergehäuses 1 mit daran festgelegter Kontakteinheit 10 auf der Stützplatine 7 gewährleistet ist.

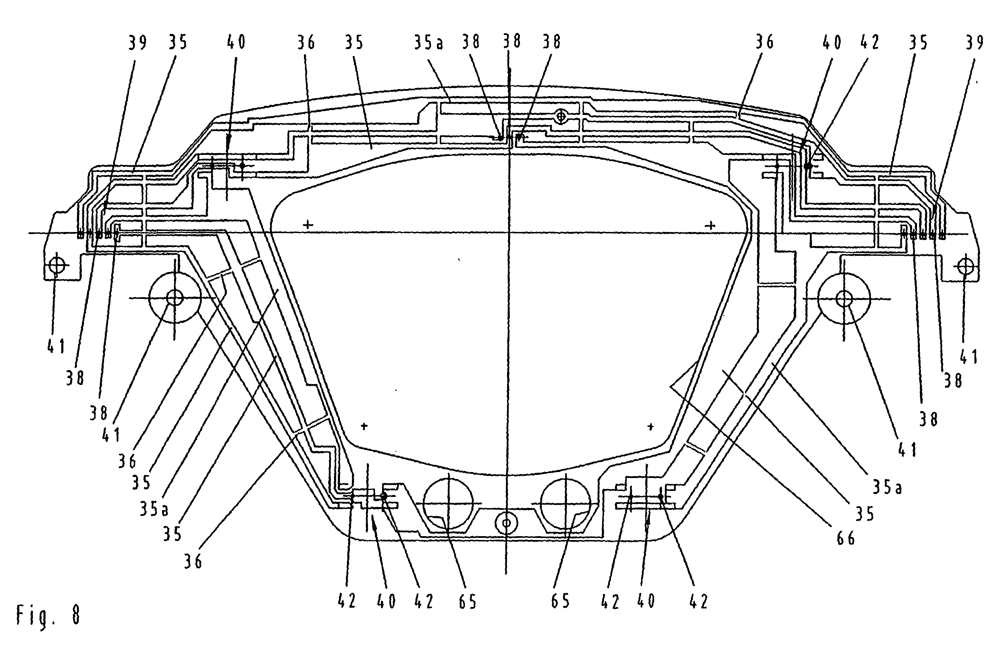

In der Fig. 8 ist eine Ansicht auf die als Stanzgitter ausgebildeten Verbindungsleitungen 35, 35a ohne die Abwinklungen 19 dargestellt. Aus Gründen der Übersichtlichkeit wurde auf die Schraffur verzichtet. Die Verbindungsleitungen 35, 35a erstrecken sich, ausgehend von den drei Steckerstiften 38 der Anschlußkontakte 32, über die gesamte Kontakteinheit 10. Teilweise enden sie an den Schalterkontakten 39, in denen jeweils fünf Steckerstifte 38 angeordnet sind, teilweise laufen sie von dort weiter und verzweigen. Einige Verbindungsleitungen 35a verlaufen nur zwischen den Schalterkontakten 39 oder zwischen den Schalterkontakten 39 und den Kontaktstellen 40 für die Hupenschalter 15. Für jeden Hupenschalter 15 sind in den Kontaktstellen 40 vier Bereiche der Verbindungsleitungen 35, 35a zum elektrischen Anschluß vorhanden. Der zentrale Bereich jeder Kontaktstelle 40 ist mit Einsetzlöchern 42 zur Fixierung des Hupenschalters 15 versehen, die beim Stanzen der Verbindungsleitungen 35 bzw. beim Spritzen der Kontakteinheit 10 hergestellt werden. Damit das Stanzgitter eine stabile Form besitzt und als ein Teil handhabbar ist, sind zwischen den Verbindungsleitungen 35 die Stege 36 vorhanden.

Über diese Stege 36 werden die Verbindungsleitungen gehalten. Nach dem Umspritzen erfolgt, je nach elektrischer Anforderung, das Durchtrennen der Stege 36.

Die Fig. 9 zeigt die Steckerstifte 38 der Anschlußkontakte 32. Die dem Trägergehäuse 1 zugewandte Seite 11 der Kontakteinheit 10 ist mit einer Verdickung 43 versehen, in die die Ausformung 31 eingelassen ist. Innerhalb der Ausformung 31 liegen die Verbindungsleitungen 35, 35a zur Seite 11 frei. In die Verbindungsleitungen 35, 35a sind Einstecklöcher 44 für die Steckerstifte 38 eingestanzt, durch die diese hindurchgeführt sind. Die Steckerstifte 38 werden innerhalb der Ausformung 31 mit den Verbindungsleitungen 35, 35a verschweißt. Auf der der Ausformung 31 gegenüberliegenden Seite 12 ist ein Steckersockel 45 zur mechanischen Halterung der Steckerstifte 38 angeformt, der diese über einen großen Teil ihrer Länge haltert. Der frei über den Steckersockel 45 hinausragende Teil der Steckerstifte 38 ist von einem eine Steckkodierung umfassenden Steckerkragen 46 schützend umgeben.

Gemäß Fig. 10 ist die Schalterführung 20 über zwei Abwinklungen 19 mit der Kontakteinheit 10 verbunden, wobei zwischen der der Schalterführung 20 naheliegenden Abwinklung 19 und der Schalterführung 20 eine die Verbindungsleitungen 35, 35a freilegende Trennstelle 34 angeordnet ist. Ferner liegen die Verbindungsleitungen 35, 35a in Richtung der Seite 12 der Kontakteinheit 10 im Bereich der Schalterführung 20 in einer Ausformung 47 frei, um dort das Verschweißen der Steckerstifte 38 des Schalterkontaktes 39 mit den Verbindungsleitungen 35, 35a zu ermöglichen. Die Steckerstifte 38 erstrecken sich zur Seite 11 der Kontakteinheit 10 hin in einen Kragen 48 der Schalterführung 20, der zwei diagonal gegenüberliegende Ausbuchtungen 49 als Steckkodierung aufweist (siehe auch Fig. 4). Im Bereich der Ausbuchtungen 49 sind aus fertigungstechnischen Gründen Löcher 50 eingelassen. Die Steckerstifte 38 in den Schalterführungen 20 sind entgegengesetzt zu den Stekkerstiften 38 der Anschlußkontakte 32 ausgerichtet, wodurch die Kontakteinheit zur Fahrzeugseite hin an das Bordnetz angeschlossen und zur Bedienerseite hin mit Einzelschaltern 3 verbunden wird. Die Verschweißung der Steckerkontakte 38 mit den Verbindungsleitungen 35 erfolgt somit von beiden Seiten des Stanzgitters.

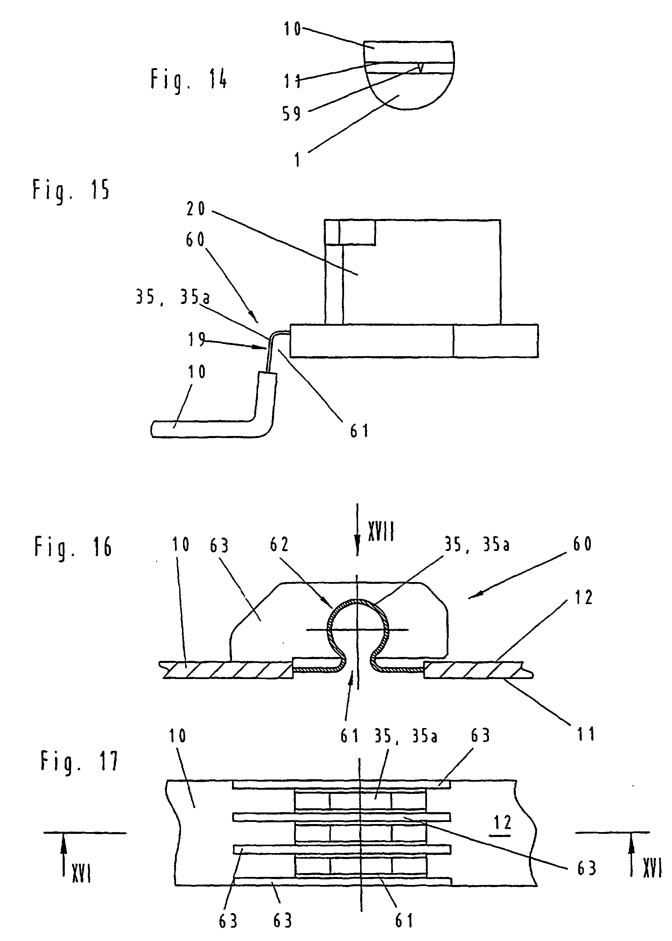

Die Fig. 11 zeigt das aus einer mit Versteifungsrippen 52 versehenen Hülse 53 bestehende Lageelement 41, in das die als Stufenbohrung ausgeführten Bohrung 51 eingebracht ist. Der große Durchmesser der Bohrung 51 beginnt deckungsgleich mit der Seite 12 der Kontakteinheit 10.

Nach den Fig. 12 und 13 sind auf der Seite 12 der Kontakteinheit 10 die vier kreisringförmigen und geschlitzten Dome 37 angespritzt, die im Bereich des Schlitzes 67 eine Vertiefung 53 aufweisen, in der die Kontaktstellen 40 für die Hupenschalter 15 freiliegen. Von den Seitenwänden 54 jedes Domes 37 erstrecken sich vier nach innen gerichtete Führungsrippen 55, zwischen denen der Hupenschalter 15 mit geringem Spiel aufgenommen ist. Innerhalb der Vertiefung 53 sind im Boden 64 des Domes die beiden beabstandeten, unterschiedliche Durchmesser aufweisenden Einsetzlöcher 42 angeordnet, durch die eine vorbestimmte Lage des Hupenschalters 15 ermöglicht wird, da der Hupenschalter 15 an seiner Unterseite mit korrespondierenden Zapfen 56 versehen ist. Die Oberkante einer Taste 57 des Hupenschalters 15 liegt unterhalb der Oberkante der Seitenwände 54 des Domes 37, wodurch der Hupenschalter 15 bei der Montage des Lenkradschalters vor Beschädigung geschützt ist. Die Betätigung der Tasten 57 erfolgt mittels der an der Stützplatine 7 angeformten Druckstößel 14, die in den Dom 37 hineinragen.

Fig. 14 zeigt an der Seite 11 der Kontakteinheit 10 eine Ausgleichsrippe 59, die unter leichter Vorspannung an dem Trägergehäuse 1 anliegt. Hierdurch wird eine Geräuschentwicklung durch Vibrationen der Kontakteinheit 10 verhindert.

Gemäß Fig. 15 befindet sich ein Toleranzausgleich 60 der Kontakteinheit 10 in der Abwinklung 19 unmittelbar vor der Schalterführung 20. Ein Ausbruch 61 legt das Stanzgitter beidseitig frei, so daß die Schalterführung 20 zwei Freiheitsgrade aufweist. Eine alternative Ausführung zeigen die Fig. 16 und 17. Hierbei ist der Ausbruch 61 in einen ebenen Bereich der Kontakteinheit 10 eingearbeitet. Die Verbindungsleitungen 35, 35a weisen je eine aus der Ebene der Kontakteinheit 10 herausgebogene Dehnschleife 62 auf, über die Freiheitsgrade in allen Ebenen erreicht werden. Damit die Verbindungsleitungen sich im Bereich der Dehnschleife 62 nicht berühren, sind an der Seite 12 der Kontakteinheit 10 Isolierscheiben 63 angeformt, die höher als die Dehnschleife 62 und länger als der Ausbruch 61 ausgebildet sind. Die Isolierscheiben 63 liegen auf der Seite 12 der Kontakteinheit 10 auf, so daß sich die Kontakteinheit 10 ohne Verklemmen zusammenschieben läßt, und eine Kontaktierung der Dehnschleife 62 vermieden wird.

Im folgenden wird der Funktionsablauf bei Betätigung der Hupenschalter 15 und der Einzelschalter 3 geschildert. Die Einzelschalter 3 liegen zwischen den Speichen des Lenkrades für den Benutzer frei zugänglich und sichtbar vor. Sie sind den Erfordernissen entsprechend als Tast- und/oder Rastschalter ausgeführt. Beim Betätigen der Tast- und/oder Rastschalter wird ein Strompfad im Innern des Lenkradschalters kurzfristig oder dauernd geschlossen. Das elektrische Signal wird über die Verbindungsleitungen 35, 35a zu den Anschlußkontakten 32 geleitet und von dort dem Bordnetz zugeführt. Da jedoch nur drei Anschlußkontakte 32 bei einer Vielzahl von unterschiedlichen möglichen und erwünschten Schaltvorgängen vorhanden sind, muß das elektrische Signal mittels Kodierelementen, wie Widerständen und dgl. kodiert werden. Das Betätigen der Hupenschalter 15 erfolgt durch Niederdrücken der das Airbagmodul überdeckenden Prallplatte an beliebiger Stelle in Richtung der Lenksäule. Über das Airbagmodul wird das Trägergehäuse 1 mit festgelegter Kontakteinheit 10 in Richtung der Stützplatine 7 gegen die Wirkung der Druckfedern 30 bewegt. Der Druckstößel 14 taucht in das Innere des Domes 37 ein und beaufschlagt die Taste 57 des Hupenschalters 15. Bevor der Dom 37 an der Stützplatine 7 zur Anlage kommt, ist der Strompfad des Hupenschalters 15 bereits geschlossen, wobei die Taste 57 des Hupenschalters 15 bei Anlage des Domes 37 an der Stützplatine 7 weiteren freien Hub aufweist. Hierdurch wird eine Beschädigung des Hupenschalters 15 vermieden, da die hohe Abstützkraft nicht vom Hupenschalter 15 abgefangen werden muß. Nach dem Loslassen des Airbagmoduls wird dieses und das Trägergehäuse 1 unter der Wirkung der Druckfeder 30 von der Stützplatine 7 abgedrückt, der Druckstößel 14 gibt die Taste 57 des Hupenschalters 15 frei und der Strompfad ist unterbrochen. Die Hupenschalter 15 sind derart den Verbindungsleitungen 35, 35a des Stanzgitters zugeordnet, daß, ganz gleich welcher Hupenschalter 15 betätigt ist, der Strompfad für die Hupenbetätigung geschlossen wird, und das Hupensignal ertönt.

## Patentansprüche

1. Lenkradschalter für ein Kraftfahrzeug mit mehreren Einzelschaltern (3) und mit einem innerhalb des Lenkrades angeordneten Trägergehäuse (1) zur Aufnahme eines Airbagmoduls, über das mindestens ein Hupenschalter (15) beaufschlagbar ist, wobei innerhalb des Lenkrades eine Stützplatine (7) festgelegt ist, auf der sich federbelastet, taumelnd das Trägergehäuse (1) abstützt, **dadurch gekennzeichnet, daß** an dem Trägergehäuse (1) auf der der Stützplatine (7) zugewandten Seite (12) eine Kontakteinheit (10) mit Anschlußkontakten (32) befestigt ist, die über Verbindungsleitungen (35) die Einzelschalter (3) kontaktierende Schalterführungen (20) und den auf Verbindungsleitungen (35, 35a) angeordneten Hupenschalter (15) aufweist.

2. Lenkradschalter nach Anspruch 1, **dadurch gekennzeichnet, daß** die als Stanzgitter ausgebildeten Verbindungsleitungen (35, 35a) der Kontakteinheit (10) in einem umhüllenden Kunststoffkörper (33) eingebettet sind, der Trennstellen (34) besitzt, an denen die Verbindungsleitungen (35, 35a) über freiliegende Stege (36) miteinander verbunden sind.

3. Lenkradschalter nach Anspruch 2, **dadurch gekennzeichnet, daß** der Kunststoffkörper (33) im Bereich der Steckerstifte (38) der Schalterführungen (20), der Anschlußkontakte (32) und der Hupenschalter (15) Freimachungen aufweist, wodurch die Verbindungsleitungen (35, 35a) freiliegende Kontaktstellen (40) bilden.

4. Lenkradschalter nach einem der Ansprüche 1 bis 3, **dadurch gekennzeichnet, daß** die Anschlußkontakte (32) und die Schaltkontakte (39) der Schalterführungen (20) als an den Verbindungsleitungen (35) angeschweißte Steckerstifte (38) ausgebildet sind.

5. Lenkradschalter nach Anspruch 4, **dadurch gekennzeichnet, daß** die Steckerstifte (38) der Anschlußkontakte (32) in Richtung der Stützplatine (7) und die Steckerstifte (38) der Schalterführungen (20) in Richtung des Trägergehäuses (1) weisen.

6. Lenkradschalter nach einem der Ansprüche 1 bis 5, **dadurch gekennzeichnet, daß** die die Einzelschalter (3) aufnehmenden Schalterführungen (20) auf gegenüberliegenden doppelten Abwinklungen (19) der Kontakteinheit (10) angeordnet sind.

7. Lenkradschalter nach einem der Ansprüche 1 bis 6, **dadurch gekennzeichnet, daß** die Schalterführungen (20) einen die Schaltkontakte (39) umschließenden Kragen (48) umfassen, der eine Steckkodierung (49) aufweist.

8. Lenkradschalter nach Anspruch 1, **dadurch gekennzeichnet, daß** das Trägergehäuse (1) auf der der Stützplatine (7) zugewandten Seite mit mehreren, die Kontakteinheit (10) durchragenden Gewindebuchsen (8) zur Verschraubung des Trägergehäuses (1) mit der Stützplatine (7) versehen ist.

9. Lenkradschalter nach einem der Ansprüche 1 bis 8, **dadurch gekennzeichnet, daß** die Kontakteinheit (10) auf ihrer der Stützplatine (7) zugewandten Seite (12) mehrere von Druckfedern (30) übergriffene in Richtung der Stützplatine (7) offene Dome (37) aufweist, die länger als die Gewindebuchsen (8) ausgeführt sind, wobei jeder der diametral geschlitzten Dome (37) einen als Tastschalter ausgebildeten Hupenschalter (15) aufnimmt.

10. Lenkradschalter nach Anspruch 9, **dadurch gekennzeichnet, daß** die Druckfedern (30) zwischen Stützplatine (7) und Kontakteinheit (10) mit Vorspannung angeordnet sind.

11. Lenkradschalter nach den Ansprüchen 9 und 10, **dadurch gekennzeichnet, daß** die Seitenwände (54) jedes Domes (37) mindestens die gleiche Höhe wie der zugeordnete Hupenschalter (15) im betätigten Zustand und innere Führungsrippen (55) zu Fixierung des Hupenschalters (15) aufweisen.

12. Lenkradschalter nach einem der Ansprüche 9 bis 11, **dadurch gekennzeichnet, daß** im Boden (64) jedes Domes (37) der Kontakteinheit (10) mindestens ein Einsetzloch (42) vorhanden ist, in das ein an der Unterseite des Hupenschalters (15) angeformter Zapfen eingesetzt ist.

13. Lenkradschalter nach einem der Ansprüchen 1 bis 12, **dadurch gekennzeichnet, daß** die Kontakteinheit (10) im Bereich jeder seitlichen Abwinklung (19) sowie dazu beabstandet jeweils eine Bohrung (51) zur Verschraubung sowohl der Einzelschalter (3) als auch des Trägergehäuses (1) mit der Kontakteinheit (10) aufweist.

14. Lenkradschalter nach einem der Ansprüche 1 bis 13, **dadurch gekennzeichnet, daß** die Kontakteinheit (10) auf der dem Trägergehäuse (1) und/oder auf der der Stützplatine (7) zugewandten Seite mit Ausgleichsrippen (59) versehen ist.

15. Lenkradschalter nach einem der Ansprüche 1 bis 14, **dadurch gekennzeichnet, daß** der Kontakteinheit (10) mindestens ein Toleranzausgleich (60) zugeordnet ist.

16. Lenkradschalter nach Anspruch 15, **dadurch gekennzeichnet, daß** der Toleranzausgleich (60) als das Stanzgitter einseitig freilegender Ausbruch (61) im Bereich der Abwinklungen (19) der Kontakteinheit (10) ausgebildet ist.

17. Lenkradschalter nach Anspruch 15, **dadurch gekenzeichnet,** daß der Toleranzausgleich (60) durch mindestens einen Ausbruch (61) in einem ebenen Bereich der Kontakteinheit (10) eingearbeitet ist, wobei das Stanzgitter im Bereich des Ausbruchs (61) eine Dehnschleife (62) aufweist.

18. Lenkradschalter nach Anspruch 17, **dadurch gekennzeichnet, daß** im Bereich des Ausbruchs (61) zwischen den Verbindungsleitungen (35) des Stanzgitters die Dehnschleife (62) überragende Isolierscheiben (63) an einer Seite der Kontakteinheit (10) angeordnet sind.

19. Lenkradschalter nach einem der Ansprüche 1 bis 18, **dadurch gekennzeichnet, daß** zwischen den Verbindungsleitungen (35) der Kontakteinheit (10) und/oder den Schaltleitungen in den Einzelschaltern (3) Widerstände zwischengeschaltet sind.

## Claims

1. Steering wheel switch for an automotive vehicle, said switch having a plurality of individual switches (3) and a support housing (1), which is disposed internally of the steering wheel, for the accommodation of an airbag module, via which at least one horn switch (15) can be acted upon, a support plate (7) being secured internally of the steering wheel, the support housing (1) being supported on said plate in a spring-loaded, wobbling manner, **characterised in that** a contact unit (10), provided with connection contacts (32), is mounted on the support housing (1) on the side (12) facing the support plate (7), said contact unit having switch guides (20), which contact the individual switches (3) via connecting lines (35), and the horn switch (15) disposed on connecting lines (35, 35a).

2. Steering wheel switch according to claim 1, **characterised in that** the connecting lines (35, 35a) of the contact unit (10), which are in the form of a stamped grid, are embedded in an enclosing plastics material body (33) which has disconnecting points (34), the connecting lines (35, 35a) being interconnected at said disconnecting points via exposed webs (36).

3. Steering wheel switch according to claim 2, **characterised in that** the plastics material body (33) has clearances in the region of the plug pins (38) of the switch guides (20), the connection contacts (32) and the horn switches (15), whereby the connecting lines (35, 35a) form exposed contact locations (40).

4. Steering wheel switch according to one of claims 1 to 3, **characterised in that** the connection contacts (32) and the switching contacts (39) of the switch guides (20) are in the form of plug pins (38) welded to the connecting lines (35).

5. Steering wheel switch according to claim 4, **characterised in that** the plug pins (38) of the connection contacts (32) point in the direction of the support plate (7), and the plug pins (38) of the switch guides (20) point in the direction of the support housing (1).

6. Steering wheel switch according to one of claims 1 to 5, **characterised in that** the switch guides (20), which accommodate the individual switches (3), are disposed on oppositely situated double angular portions (19) of the contact unit (10).

7. Steering wheel switch according to one of claims 1 to 6, **characterised in that** the switch guides (20) include a collar (48), which surrounds the switching contacts (39) and has a plug-in code (49).

8. Steering wheel switch according to claim 1, **characterised in that** the support housing (1) is provided with a plurality of threaded bushes (8), which protrude through the contact unit (10), on the side facing the support plate (7) for screw-connecting the support housing (1) to the support plate (7).

9. Steering wheel switch according to one of claims 1 to 8, **characterised in that** the contact unit (10) has, on its side (12) facing the support plate (7), a plurality of domes (37) which are overlapped by compression springs (30) and are open in the direction of the support plate (7), said domes being longer than the threaded bushes (8), and each of the diametrically slotted domes (37) accommodating a horn switch (15) which is in the form of a key switch.

10. Steering wheel switch according to claim 9, **characterised in that** the compression springs (30) are disposed, with initial tension, between support plate (7) and contact unit (10).

11. Steering wheel switch according to claims 9 and 10, **characterised in that** the lateral walls (54) of each dome (37) have at least the same height as the associated horn switch (15) in the actuated state and internal guide ribs (55) to secure the horn switch (15).

12. Steering wheel switch according to one of claims 9 to 11, **characterised in that**, in the base (64) of each dome (37) of the contact unit (10), at least one insertion hole (42) is provided, into which a pin is inserted, said pin being shaped to fit on the underside of the horn switch (15).

13. Steering wheel switch according to one of claims 1 to 12, **characterised in that** the contact unit (10) has, in the region of each lateral angular portion (19) and spaced therefrom, a respective bore (51) for screw-connecting both the individual switches (3) and the support housing (1) to the contact unit (10).

14. Steering wheel switch according to one of claims 1 to 13, **characterised in that** the contact unit (10) is provided with compensation ribs (59) on the side facing the support housing (1) and/or on the side facing the support plate (7).

15. Steering wheel switch according to one of claims 1 to 14, **characterised in that** at least one tolerance compensation means (60) is associated with the contact unit (10).

16. Steering wheel switch according to claim 15, **characterised in that** the tolerance compensation means (60) is in the form of a cutout (61), which covers the stamped grid at one end, in the region of the angular portions (19) of the contact unit (10).

17. Steering wheel switch according to claim 15, **characterised in that** the tolerance compensation means (60) is incorporated in a flat region of the contact unit (10) through at least one cutout (61), the stamped grid having an expansion loop (62) in the region of the cutout (61).

18. Steering wheel switch according to claim 17, **characterised in that** insulating discs (63), which protrude beyond the expansion loop 62), are disposed on one side of the contact unit (10) in the region of the cutout (61) between the connecting lines (35) of the stamped grid.

19. Steering wheel switch according to one of claims 1 to 18, **characterised in that** resistors are interposed between the connecting lines (35) of the contact unit (10) and/or the switching lines in the individual switches (3).

## Revendications

1. Commutateur de volant de direction pour un véhicule automobile, avec plusieurs commutateurs individuels (3) et avec un boîtier porteur (1) disposé à l'intérieur du volant de direction pour recevoir un module d'airbag, par l'intermédiaire duquel au moins un commutateur d'avertisseur (15) peut être actionné, à l'intérieur du volant de direction étant fixée une platine d'appui (7) sur laquelle le boîtier porteur (1) prend appui de manière flottante sous sollicitation élastique, **caractérisé en ce que** sur le boîtier porteur (1), sur le côté (12) tourné vers la platine d'appui (7), est fixée une unité de contact (10) avec contacts de connexion (32), laquelle comporte des guides de commutateurs (20), mettant en contact les commutateurs individuels (3) par l'intermédiaire de lignes de liaison (35), et le commutateur d'avertisseur (15) disposé sur des lignes de liaison (35, 35a).

2. Commutateur de volant de direction selon la revendication 1, **caractérisé en ce que** les lignes de liaison (35, 35a) de l'unité de contact (10) conformées en grille estampée sont encastrées dans un corps en matière plastique enveloppant (33) qui possède des points de séparation (34), au niveau desquels les lignes de liaison (35, 35a) sont reliées entre elles par l'intermédiaire de barrettes apparentes (36).

3. Commutateur de volant de direction selon la revendication 2, **caractérisé en ce que**, dans la région des broches (38) des guides de commutateurs (20), des contacts de connexion (32) et des commutateurs d'avertisseur (15), le corps en matière plastique (33) comporte des évidements, de sorte que les lignes de liaison (35, 35a) forment des points de contact apparents (40).

4. Commutateur de volant de direction selon l'une des revendications 1 à 3, **caractérisé en ce que** les contacts de connexion (32) et les contacts de commutation (39) des guides de commutateurs (20) sont conformés en broches (38) soudées aux lignes de liaison (35).

5. Commutateur de volant de direction selon la revendication 4, **caractérisé en ce que** les broches (38) des contacts de connexion (32) sont orientées en direction de la platine d'appui (7), et les broches (38) des guides de commutateurs (20) sont orientées en direction du boîtier porteur (1).

6. Commutateur de volant de direction selon l'une des revendications 1 à 5, **caractérisé en ce que** les guides de commutateurs (20) recevant les commutateurs individuels (3) sont disposés sur des portions coudées doubles opposées (19) de l'unité de contact (10).

7. Commutateur de volant de direction selon l'une des revendications 1 à 6, **caractérisé en ce que** les guides de commutateurs (20) comportent un collet (48) qui entoure les contacts de commutation (39) et qui comporte un codage d'enfichage (49).

8. Commutateur de volant de direction selon la revendication 1, **caractérisé en ce que** le boîtier porteur (1) est muni, sur le côté tourné vers la platine d'appui (7), de plusieurs douilles filetées (8) traversant l'unité de contact (10) pour le vissage du boîtier porteur (1) avec la platine d'appui (7).

9. Commutateur de volant de direction selon l'une des revendications 1 à 8, **caractérisé en ce que** l'unité de contact (10) comporte, sur son côté (12) tourné vers la platine d'appui (7), plusieurs plots (37) entourés par des ressorts de pression (30), ouverts en direction de la platine d'appui (7) et plus longs que les douilles filetées (8), chacun des plots fendus diamétralement (37) recevant un commutateur d'avertisseur (15) conformé en bouton-poussoir.

10. Commutateur de volant de direction selon la revendication 9, **caractérisé en ce que** les ressorts de pression (30) sont disposés avec précontrainte entre la platine d'appui (7) et l'unité de contact (10).

11. Commutateur de volant de direction selon les revendications 9 et 10, **caractérisé en ce que** les parois latérales (54) de chaque plot (37) présentent au moins la même hauteur que le commutateur d'avertisseur associé (15) à l'état actionné et des nervures de guidage intérieures (55) pour le maintien du commutateur d'avertisseur (15).

12. Commutateur de volant de direction selon l'une des revendications 9 à 11, **caractérisé en ce que** dans le fond (64) de chaque plot (37) de l'unité de contact (10) est ménagé au moins un trou d'insertion (42) dans lequel est inséré un téton moulé sur la sous-face du commutateur d'avertisseur (15).

13. Commutateur de volant de direction selon l'une des revendications 1 à 12, **caractérisé en ce que** l'unité de contact (10) comporte, dans la région de chaque portion coudée latérale (19) ainsi qu'à distance de celle-ci, des perçages (51) pour le vissage aussi bien des commutateurs individuels (3) que du boîtier porteur (1) avec l'unité de contact (10).

14. Commutateur de volant de direction selon l'une des revendications 1 à 13, **caractérisé en ce que** l'unité de contact (10) est munie de nervures de compensation (59) sur le côté tourné vers le boîtier porteur (1) et/ou sur le côté tourné vers la platine d'appui (7).

15. Commutateur de volant de direction selon l'une des revendications 1 à 14, **caractérisé en ce qu'**à l'unité de contact (10) est associée au moins un moyen de compensation de tolérance (60).

16. Commutateur de volant de direction selon la revendication 15, **caractérisé en ce que** le moyen de compensation de tolérance (60) est conformé en découpe (61) découvrant d'un côté la grille estampée dans la zone des portions coudées (19) de l'unité de contact (10).

17. Commutateur de volant de direction selon la revendication 15, **caractérisé en ce que** le moyen de compensation de tolérance (60) est constitué par au moins une découpe (61) dans une zone plane de l'unité de contact (10), la grille estampée comportant une boucle d'allongement (62) dans la zone de la découpe (61).

18. Commutateur de volant de direction selon la revendication 17, **caractérisé en ce que**, dans la zone de la découpe (61), entre les lignes de liaison (35) de la grille estampée, des plaques isolantes (63) dépassant la boucle d'allongement (62) sont disposées sur un côté de l'unité de contact (10).

19. Commutateur de volant de direction selon l'une des revendications 1 à 18, **caractérisé en ce que** des résistances sont interconnectées entre les lignes de liaison (35) de l'unité de contact (10) et/ou les lignes de commutation dans les commutateurs individuels (3).
